(19) Europäisches Patentamt
European Patent Office
Office européen des brevets

(11) **EP 1 548 279 A1**

(12) **EUROPÄISCHE PATENTANMELDUNG**

(43) Veröffentlichungstag:
**29.06.2005 Patentblatt 2005/26**

(51) Int Cl.7: **F03D 11/02**, F16H 47/08,
F16H 61/50, F03D 7/04

(21) Anmeldenummer: **04026122.4**

(22) Anmeldetag: **04.11.2004**

(84) Benannte Vertragsstaaten:
**AT BE BG CH CY CZ DE DK EE ES FI FR GB GR HU IE IS IT LI LU MC NL PL PT RO SE SI SK TR**
Benannte Erstreckungsstaaten:
**AL HR LT LV MK YU**

(30) Priorität: **23.12.2003 DE 10361443**

(71) Anmelder: **Voith Turbo GmbH & Co. KG**
**89522 Heidenheim (DE)**

(72) Erfinder:
• **Tilscher, Martin, Dr.**
**89522 Heidenheim (DE)**
• **Basteck, Andreas, Dr.**
**79540 Lörrach (DE)**

(74) Vertreter: **Dr. Weitzel & Partner**
**Friedenstrasse 10**
**89522 Heidenheim (DE)**

(54) **Regelung für eine Windkraftanlage mit hydrodynamischem Getriebe**

(57) Die Erfindung betrifft eine Windkraftanlage mit mindestens drei Regelungsebenen;

- die erste Regelungsebene umfasst einen Windrotor, ein Leistungsverzweigungsgetriebe, das wenigstens mittelbar vom Windrotor angetrieben wird und einen ersten und einen zweiten Leistungszweig umfasst, einen hydrodynamischen Stellwandler mit wenigsten einem Reaktionsglied, der Leistung vom ersten Leistungszweig aufnimmt und in Abhängigkeit der Einstellung des Reaktionsglieds einen Leistungsrückfluss über den zweiten Leistungszweig zum Leistungsverzweigungsgetriebe bewirkt, sowie einen Generator, der wenigstens mittelbar vom ersten Leistungszweig angetrieben wird und elektrische Leistung an ein elektrisches Netz mit konstanter Netzfrequenz abgibt;
- die Kombination aus Leistungsverzweigungsgetriebe und hydrodynamischem Stellwandler der ersten

Regelungsebene entspricht in ihrer Charakteristik im Wesentlichen der Leistungsaufnahme des Windrotors bei leistungsoptimaler Drehzahlführung;
- in der ersten Regelungsebene wird die Einstellung des Reaktionsglieds des hydrodynamischen Stellwandlers gesteuert;
- die zweite Regelungsebene umfasst einen Regler für die Winkelstellung der Rotorblätter und/oder einen Regler für die Einstellung des Reaktionsglieds des hydrodynamischen Stellwandlers und/oder einen Regler der Leistungselektronik des Generators;
- in Abhängigkeit der Betriebszustände der Windkraftanlage und/oder des elektrischen Netzes und/oder der Windcharakteristik aktiviert und deaktiviert und/oder gewichtet die dritte Regelungsebene die Regler der zweiten Regelungsebene und/oder gibt diesen Sollkennlinien vor.

Figur 1

**Beschreibung**

Die Erfindung betrifft eine Regelung für eine Windkraftanlage mit einem hydrodynamischen Getriebe im Antriebsstrang zwischen Windrotor und einem an ein elektrisches Netz mit Festfrequenz gekoppelten Generator.

Wird die besondere Systemcharakteristik von Windkraftanlagen zunächst von der Leistungsaufnahmeseite betrachtet, so besteht, neben dem im zeitlichen Verlauf typischerweise stark schwankenden Leistungspotenzial der Luftströmung, eine Besonderheit in der Leistungskonvertierung der mechanischen Leistung des Luftstromes in die mechanische Leistung des Windrotors. Hierbei kann jeder Strömungsgeschwindigkeit des antreibenden Luftstromes ein optimales Drehzahl/Drehmomentverhältnis für den Windrotor zugeordnet werden, das wiederum von der Geometrie und der Gestaltung des Windrotors abhängt. Die Verlaufskurve, die eine von der Windgeschwindigkeit abhängige optimale Drehzahl des Windrotors beschreibt, wird als Parabolik bezeichnet. In der vorliegenden Anmeldung wird für eine Rotordrehzahl, die dieser Parabolik folgt, der Begriff einer leistungsoptimalen Drehzahl verwendet.

Aus der Konvertierung der mechanischen Leistung einer Windkraftanlage in eine elektrische Leistung mittels eines elektrischen Generators ergibt sich weiterhin eine Anforderung an Windkraftanlagen, da durch die Aufschaltung des elektrischen Generators auf ein elektrisches Verbundnetz auch die konstant zu haltende Netzfrequenz zu beachten ist.

Bei der Ankoppelung eines elektrischen Generators an das Netz besteht eine erste Lösung darin, den gesamten Antriebsstrang der Windkraftanlage und damit auch den Windrotor drehzahlstarr auszubilden. Solche drehzahlstarren Windkraftanlagen können bei der Verwendung von Asynchrongeneratoren aufgrund des Prinzipien bedingten Schlupfes auf einfache Art und Weise auf ein elektrisches Verbundnetz aufgeschaltet werden. Hierbei wird die Drehzahlkonstanz auf dem Antriebsstrang durch das Getriebe auf den Windrotor übertragen, so dass der Windrotor bei verschiedenen Windgeschwindigkeiten nicht in seinem Leistungsoptimum fährt. Besonders nachteilig an drehzahlstarren Windkraftanlagen ist, dass sie insbesondere bei Teillast, welche bei typischen Windverhältnissen häufig auftritt, nur mit verminderter Effizienz betrieben werden können.

Wird eine Windkraftanlage im Allgemeinen und insbesondere im Teillastbereich mit variabler Rotordrehzahl betrieben, so besteht entweder die Möglichkeit einen Antriebsstrang mit variabler oder konstanter Ausgangsdrehzahl auszubilden, was zu einer variablen oder konstanten Generatordrehzahl führt. Dabei ist in beiden Fällen die Ausgangsleistung aufgrund des zeitlich variierenden Momentes ebenfalls zeitlich veränderlich.

Der erste Fall führt bei Windkraftanlagen zur Verwendung von Frequenzumrichtern, die den Generator mit der erforderlichen Frequenz anregen bzw. Kompensationen zur Differenz der bestehenden Netzfrequenz aufbringen und somit einen drehzahlvariablen Generator verwirklichen. Dieser Ansatz leitet aber weg von der hier dargestellten Aufgabe und ist insbesondere mit Schwierigkeiten behaftet, wie der komplexen Regelungs- und Steuerkreise, der schlecht abbildbaren parabolischen Charakteristik des Windrotors im Frequenzumrichter, der Steifigkeit der definierten Generatorkennlinie durch den Frequenzumrichter, der geringeren Betriebszuverlässigkeit bei hohen Umweltauflagen, einer mit hohem Aufwand zu betreibenden Netzeinspeisequalität, wie z. B. geringe Oberschwingungsbelastung und der Erzeugung von Blindleistungen.

Der zweite Ansatz, nämlich eine variable Rotordrehzahl der Windkraftanlage mit einer konstanten Generatordrehzahl ohne Frequenzumrichter zu verbinden, entspricht der hier dargestellten Thematik einer Windkraftanlage mit variabler Eingangsdrehzahl und konstanter Ausgangsdrehzahl. Die bekannten Lösungen dieser Problematik setzen im Antriebsstrang ein Überlagerungsgetriebe ein, welches zur Verzweigung der mechanischen Leistung verwendet wird. Bei drehzahlvariablen Windkraftanlagen sind nun zwei hierauf basierende Ansätze bekannt geworden, welche zur Konstanthaltung der Generatorfrequenz verwendet werden.

Im ersten System wird die Eingangsleistung über das Überlagerungsgetriebe auf einen großen Generator sowie einen kleinen Stellmotor aufgeteilt, wobei üblicherweise auf den Stellmotor in etwa 30 % der Eingangsleistung übertragen wird. Der Generator ist frequenzstarr mit dem Stromnetz verbunden, während der Stellmotor über einen Frequenzumrichter am Netz angeschlossen ist, oder durch einen Hilfsgenerator, der am Generator mechanisch gekoppelt ist, gespeist wird. Zur Stabilisierung der Generatordrehzahl wird der Stellmotor entweder als Motor oder als Generator mit unterschiedlichen Frequenzen betrieben. In einem solchem System liegt die gleiche Problematik wie bei Windkraftanlagen mit frequenzgeregelten Generatoren vor.

Im zweiten System, welches hydrostatisch arbeitet, werden anstatt des elektrischen Stellmotors hydraulische Motoren und Pumpen verwendet. Auch hier tritt die Problematik einer schwierigen Regelungscharakteristik auf, insbesondere ein träges Ansprechverhalten und relevante Totzeiten sowie starke Nichtlinearitäten. Außerdem sind die hydraulischen Systemkomponenten aufgrund des konstruktiven Aufwands nachteilig.

Neben den voranstehend beschriebenen Anforderungen an die Regelung einer Windkraftanlage, die sich bei einer leistungsoptimalen Drehzahlführung sowie aus der Verwendung eines ans Netz gekoppelten Generators ergeben, bestehen weitere Regelungsanforderungen, die aus unterschiedlichen Betriebsbereichen und Betriebszuständen einer Windkraftanlage resultieren. In der vorliegenden Anmeldung wird der Begriff der Betriebsbereiche in Abhängigkeit des Windangebots bzw. des Auslastungsgrads der Windkraftanlage gesehen. Im Folgenden werden exemplarisch drei unterschiedliche, aneinander angrenzende Betriebsbereiche unterschieden, die, geordnet von geringen zu höheren Windgeschwindigkeiten, als Teillastbereich bzw. parabolischen Lastbetrieb, Drehzahl geführter Bereich zur Geräuschbegrenzung und leistungsbegrenzter Volllastbereich bezeichnet werden. Hiervon sind die unterschiedlichen Betriebszustände einer Windkraftanlage zu unterscheiden. Dies kann beispielsweise die Startphase, die Synchronisationsphase, die Stopphase oder ein Abbremsen der Windkraftanlage bis zum Stillstand sein. Weitere Betriebszustände können sich aus den Anforderungen der Netzankoppelung ergeben. Hierbei kann es sich um einen Lastabwurf, einen Kurzschluss, eine Blindleistungsanforderung oder eine Leistungsreduktion handeln.

Der Erfindung liegt die Aufgabe zugrunde, eine Regelung für eine Windkraftanlage anzugeben, die den Antrieb eines drehzahlkonstanten, netzgekoppelten Generators in Verbindung mit einer leistungsoptimalen Drehzahlführung des Windkraftrotors für den Teillastbereich erlaubt. Gleichzeitig soll eine Regelung angegeben werden, die auch für eine Drehzahlabregelung zur Geräuschbegrenzung und für den Volllastbetrieb geeignet ist. Ferner soll die Regelung für alle während eines Betriebs einer Windkraftmaschine auftretenden Betriebsbereiche und Betriebszustände geeignet anpassbar sein.

Zur Lösung dieser Aufgabe haben die Erfinder erkannt, dass eine für eine Windkraftanlage geeignete Regelung aus mindestens drei Regelungsebenen aufgebaut sein sollte.

Die erste Regelungsebene besteht dabei aus dem Windrotor und dem netzgekoppelten Generator, die erfindungsgemäß über einen Antriebsstrang verbunden sind, der eine Kombination aus einem Leistungsverzweigungsgetriebe und einem hydrodynamischen Stellwandler darstellt. Dieser erste Regelungskreis weist ein Eigenverhalten auf, das es erlaubt, die Rotordrehzahl leistungsoptimal zu führen und gleichzeitig eine konstante Generatordrehzahl zu gewährleisten. Dies wird entsprechend eines möglichen Ausführungsbeispiels durch den folgenden Aufbau des Antriebsstrangs erreicht:

Die Eingangswelle des Leistungsverzweigungsgetriebes ist hierbei wenigstens mittelbar mit einem Windrotor der Windkraftmaschine verbunden. Als mögliche Zwischenglieder zwischen dem Windrotor und dem Eingang des Leistungsverzweigungsgetriebes können beispielsweise Übersetzungsgetriebe angewandt werden, auch eine starre Kopplung ist möglich.

Im Leistungsverzweigungsgetriebe, das beispielsweise als Planetenumlaufgetriebe mit variablem Übersetzungsverhältnis ausgebildet sein kann, sind zwei Leistungszweige aufgebaut. Im ersten Leistungszweig wird die Ausgangswelle des Antriebsstrangs mit einer mechanischen Leistung durch den Windrotor angetrieben, wobei diese Ausgangswelle wenigstens mittelbar mit dem elektrischen Generator gekoppelt ist. Hierbei ist es notwendig, dass die Ausgangswelle für den Generatorantrieb mit einer konstanten Drehzahl umläuft. Um dies zu erreichen, wird ein hydrodynamischer Wandler mit dessen Pumpenrad von der Ausgangswelle des Antriebsstrangs wenigstens mittelbar angetrieben, wobei eine direkte Koppelung zwischen Ausgangswelle und Pumpenrad besteht. Dies setzt voraus, dass die Ausgangswelle mittels einer Übersetzung im Leistungsverzweigungsgetriebe mit einer im Vergleich zur Drehzahl der Eingangswelle deutlich höheren Drehzahl beschickt wird. Eine typische Drehzahl des elektrischen Generators ist beispielsweise 1500 U/min. Mit derart hohen Drehzahlen auf der Ausgangswelle ist wiederum ein effektiver Betrieb des hydrodynamischen Stellwandlers möglich.

In Abhängigkeit von der Stellung eines Reaktionsgliedes des hydrodynamischen Stellwandlers, typischerweise eines Leitrades mit Leitschaufeln, findet eine spezifische Leistungsaufnahme der Pumpe und der damit verbundene Leistungsübertrag zum Turbinenrad des hydrodynamischen Stellwandlers statt. Dies hat zur Folge, dass aufgrund der System inhärenten Charakteristik der Energiekonversion aus einer Luftströmung in die kinetische Energie eines Windkraftrotors und der Systemcharakteristik des Stellwandlers die Übersetzungsverhältnisse im Leistungsverzweigungsgetriebe und das Reaktionsglied des hydrodynamischen Wandlers so eingestellt werden können, dass mittels eines systeminhärenten Regelungseffektes des Stellwandlers im Verbund mit dem Überlagerungsgetriebe im Allgemeinen sowie im Besonderen im Teillastbereich der Windkraftanlage eine optimale Eingangsdrehzahl für den Windkraftrotor auf der Eingangswelle des Antriebsstranges mit der eingeprägten konstanten Generatordrehzahl auf der Ausgangswelle des Antriebsstranges erreicht werden kann. Das beinhaltet, dass Windrotor und Stellwandler als Strömungsmaschinen die gleiche Charakteristik von Drehzahl/Leistung und Drehzahl/Moment aufweisen und aufgrund ihres übereinstimmenden Systemverhaltens für die Regelung identische Verhaltensweisen erforderlich sind.

Der Antriebsstrang mit Leistungsverzweigungsgetriebe und hydrodynamischem Stellwandler mit Abgriff auf der Ausgangswelle und Leistungsrückfluss auf das Leistungsverzweigungsgetriebe wird durch die Abstimmung der mechanischen Getriebekomponenten so ausgelegt, dass die optimale Aufnahmecharakteristik des Windrotors, die angenähert einen parabolischen Verlauf aufweist, durch den Antriebsstrang abgebildet wird. Für einen solchermaßen angepassten Antriebsstrang kann für eine im Wesentlichen gleichbleibende Einstellung des Reaktionsgliedes des hydrodynamischen Wandlers eine variable Leistungsaufnahme, die Führung des Windrotors entlang der optimalen Drehzahl zur Leistungsaufnahme sowie eine konstante Generatordrehzahl erreicht werden. Dieser Effekt, der zu einer lediglich von der Auslegung abhängigen Selbstregelung der Ausgangsdrehzahl des Antriebsstranges führt, erklärt sich so, dass der hydrodynamische Wandler, der Leistung auf das Leistungsverzweigungsgetriebe zurückfließen lässt, ebenfalls eine parabolische Charakteristik aufweist. Folglich liegt erfindungsgemäß für die erste Regelungsebene keine Regelung im eigentlichen Sinne mit einem Soll-Ist-Wert Vergleich vor, vielmehr findet nur eine Steuerung des Reaktionsglieds des hydrodynamischen Stellwandlers, beziehungsweise dessen Einstellung auf einen im Wesentlichen konstanten Wert, statt, welche der Drehzahlführung des Windkraftrotors entlang der Parabolik zugeordnet ist. Entsprechend wird hierfür in der vorliegenden Anmeldung der Begriff der Selbstregelung für die erste Regelungsebene verwendet.

Eine erfindungsgemäße zweite Regelungsebene umfasst einen Regler für die Rotorblattstellung, einen Regler für die Stellung des Reaktionsgliedes des hydrodynamischen Stellwandlers sowie einen Regler für die Leistungselektronik des Generators. Die Regler dieser zweiten Regelungsebene sind, da sie einen Soll-Ist Wertvergleich durchführen und Stellsignale ausgeben, Regler im eigentlichen Sinne. Erfindungsgemäß sind die Regler der zweiten Reglerebene nicht für alle Betriebsbereiche bzw. Betriebszustände gleichzeitig aktiv bzw. weisen die gleiche Gewichtung auf. Beim Übergang zwischen den Betriebszuständen bzw. Betriebsbereichen wird ferner bevorzugt, dass auch ein graduierter Übergang in der Reglergewichtung stattfindet.

Einer dritten Regelungsebene wird erfindungsgemäß die Aufgabe zugeordnet, in Abhängigkeit der unterschiedlichen Betriebsbereiche und Betriebszustände die Auswahl der Regler aus der zweiten Reglungsebene zu steuern sowie deren Gewichtung bzw. einen entsprechend graduierten Übergang festzulegen. Ferner werden durch die dritte Regelungsebene die Soll-Werte, die Arbeitspunkte sowie bevorzugt auch die Reglereinstellungen der zweiten Regelungsebene festgelegt.

Nachfolgend wird das erfindungsgemäße Verfahren anhand von Figuren genauer beschrieben. Darin ist im Einzelnen Folgendes dargestellt:

Figur 1    zeigt die drei erfindungsgemäßen Regelungsebenen für eine Windkraftanlage mit hydrodynamischem Getriebe.

Figur 2    ist eine schematische Darstellung der ersten Regelungsebene einer erfindungsgemäßen leistungsverzweigten Windkraftanlage mit einem Stellwandler auf der Abtriebsseite.

Figur 3    zeigt schematisch den Wirkleistungsverlauf im Bestpunkt einer Windkraftanlage.

Figur 4    stellt die Leistungsflüsse und Drehzahlen der einzelnen Zweige des mechanisch-hydrodynamischen Antriebsstrangs der ersten Regelungsebene in Abhängigkeit der Windturbinendrehzahl dar.

Figur 5    stellt die Leistungsflüsse und die Einstellung des Reaktionsglieds des mechanisch-hydrodynamischen Antriebsstrangs in Abhängigkeit der Windturbinendrehzahl dar.

Figur 6    zeigt unterschiedliche Betriebsbereiche für eine Windkraftanlage.

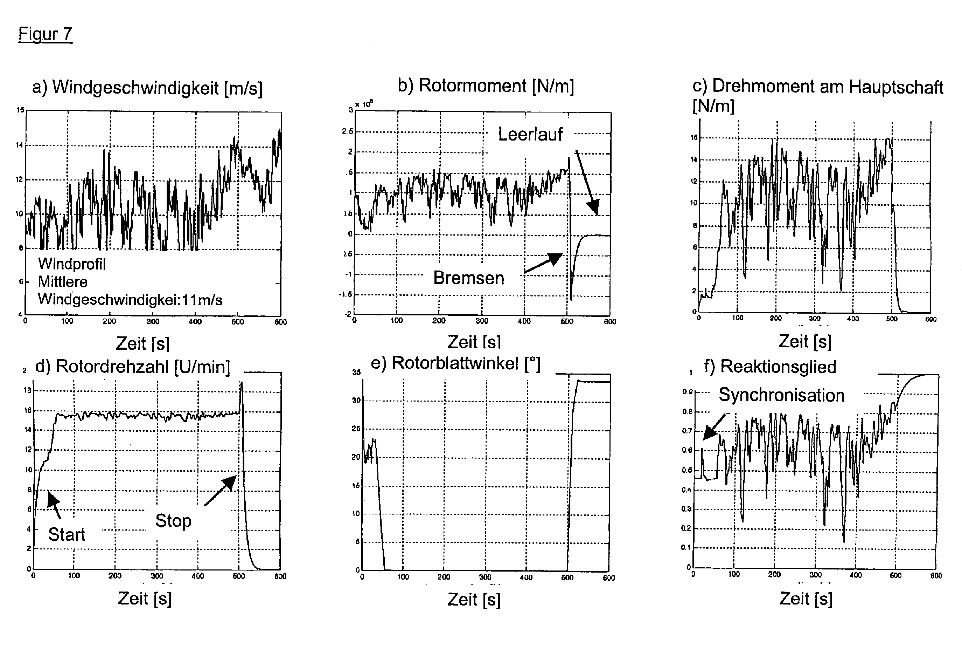

Figur 7    stellt unterschiedliche Betriebszustände für eine Windkraftanlage dar.

Figur 8    skizziert eine Ausführung einer Regelung des Reaktionsglieds des hydrodynamischen Wandlers zur Einstellung der Drehzahl des Windrotors.

Die Rotorleistung $p_R$ einer Windkraftanlage steht näherungsweise im folgenden Zusammenhang zur Windgeschwindigkeit $v_w$:

$$p_R = k\, c_p(v_w, \omega_R, \beta)\, v_w^3$$

Hierbei werden als $k$ verschiedenen Konstanten, wie etwa die Blattgeometrie sowie die Dichte der Luft, zusammengefasst. Ferner bezeichnet $c_p$ den Leistungsbeiwert, der wiederum, wie dargestellt, von der Windgeschwindigkeit $v_w$, der Rotordrehzahl $\omega_R$ und der Winkelstellung der Rotorblätter, dem so genannten Pitchwinkel $\beta$, abhängt. Dieser Leistungsbeiwert zeichnet sich durch ein globales Maximum aus, welches sich bei steigenden Windgeschwindigkeiten $v_w$ zu größeren Rotordrehzahlen $\omega_R$ hin verschiebt.

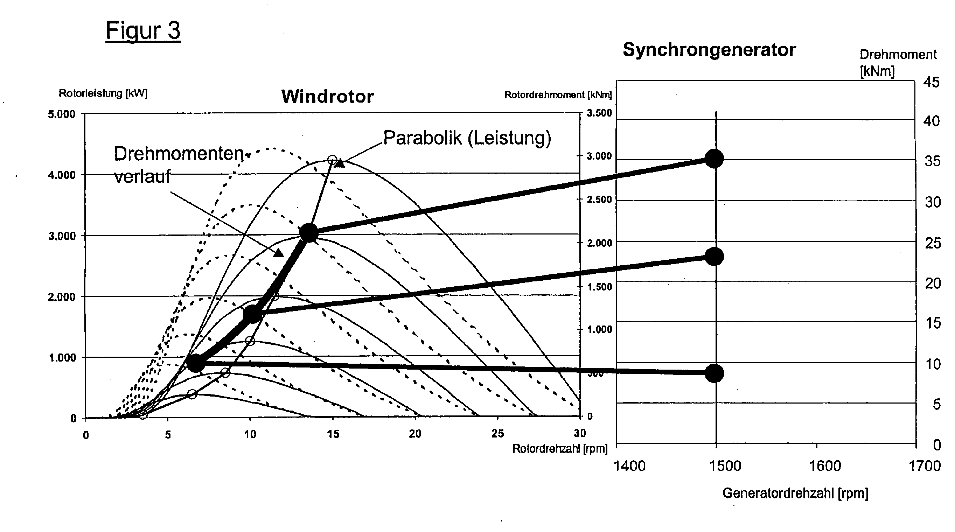

Figur 3 zeigt diesen Zusammenhang durch die Darstellung der Wirkleistung einer Windrotors unter Berücksichtigung verschiedener Windgeschwindigkeiten.

Dargestellt ist eine Kurvenschar (durchgezogene Kurven), welche exemplarisch die von einem Windrotor mit 70 m Durchmesser aus der Luftströmung aufgenommene Leistung bei konstanter Rotorblattstellung für die Windgeschwindigkeiten 18 m/s, 16 m/s, 14 m/s, 12 m/s, 10 m/s, 8 m/s zeigt. Charakteristisch ist die Verschiebung der optimalen Rotordrehzahl zu höheren Werten mit steigender Windgeschwindigkeit. Die jeweiligen Leistungsmaxima liegen auf einer Kurve, die auch als Parabolik bezeichnet wird. Eine Drehzahlführung entlang dieser Kurve der optimalen Leistungsaufnahme wird im Folgenden als leistungsoptimale Drehzahlführung für die Eingangswelle des erfindungsgemäßen Antriebsstranges bezeichnet. Eine drehzahlvariable Anlage kann somit in Abhängigkeit von der zur Verfügung stehenden Windgeschwindigkeit jeweils bei optimalen Leistungsbeiwerten betrieben werden. Zusätzlich zum drehzahlvariablen Betrieb bei Teillast werden Windkraftanlagen typischerweise für bestimmte Nennleistungen, verbunden mit einer Nenndrehzahl, ausgelegt, die jeweils bei Volllast erreicht und gehalten wird.

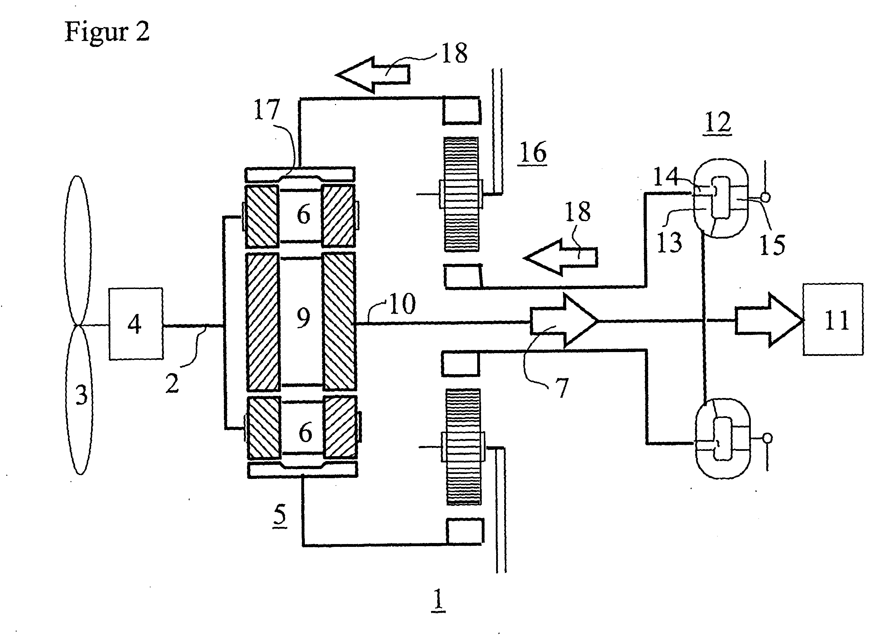

Aus Figur 3 ist ferner anhand der gestrichelt dargestellten Kurvenschar das Drehmoment des Windrotors ersichtlich. Die dargestellten Drehmomentverläufe sind den jeweiligen, von der Windgeschwindigkeit abhängigen Leistungen zugeordnet, d.h. zu jeder leistungsoptimalen Drehzahl gehört ein Drehmomentwert, der jedoch nicht dem maximalen Drehmoment bei der entsprechenden Windgeschwindigkeit entspricht, sondern einen anderen Wert annimmt - siehe hierzu die fettgedruckte Drehmomentaufnahmekurve in Figur 2. Mit diesem vom Windrotor aufgenommen Drehmoment wird über den erfindungsgemäßen Antriebstrang der elektrische Generator angetrieben. Aus dem in Figur 3 dargestellten Drehmoment/Drehzahlverhältnis für einen Synchrongenerator ist ersichtlich, dass für eine eingeprägte Netzfrequenz von 50 Hz auf die Abtriebswelle des Antriebsstranges für die unterschiedlichen übertragenen Drehmomente eine konstante Drehzahl, in diesem Beispiel 1500 U/min, abtriebsseitig vorgegeben und gehalten wird.

Wird statt des Synchrongenerators ein Asynchrongenerator verwendet, so stellt sich die Situation im Wesentlichen entsprechend dar, da bei einem Betrieb im linearen Bereich von einem so steilen Drehmoment/Drehzahlverhältnis ausgegangen werden kann, dass die Drehzahl der Abtriebswelle des Antriebsstrangs einen im Wesentlichen konstanten Wert aufweist.

Figur 2 zeigt eine mögliche Ausgestaltung einer erfindungsgemäßen ersten Regelungsebene mit einem Antriebsstrang 1, dessen Eingangswelle 2 mit dem Rotor 3 einer Windkraftmaschine wenigstens mittelbar verbunden ist. Im vorliegenden Fall ist ein Getriebe 4 mit einem konstanten Übersetzungsverhältnis zwischen dem Rotor 3 der Windkraftmaschine und der Eingangswelle 2 platziert. Im hier dargestellten Ausführungsbeispiel wird als Leistungsverzweigungsgetriebe 5 des Antriebsstranges 1 ein Planetenradgetriebe verwendet, wobei die Eingangswelle 2 mit dem Planetenradträger 6 in Verbindung steht. Im Leistungsverzweigungsgetriebe 5 liegen nun zwei Leistungszweige vor, der erste Leistungszweig 7 führt Leistung über das Sonnenrad 9 zur Ausgangswelle 10 des Antriebsstrangs. Diese Ausgangswelle 10 treibt wenigstens mittelbar den elektrischen Generator 11 an und steht in Wirkverbindung mit dem hydrodynamischen Stellwandler 12. Hierzu ist die Ausgangswelle 10 wenigstens mittelbar mit dem Pumpenrad 13 des hydrodynamischen Stellwandlers 12 verbunden. Als Reaktionsglied 15 wird im hydrodynamischen Wandler 12 ein Leitrad mit Stellschaufeln verwendet, mit dem der Leistungsfluss auf das Turbinenrad 14 eingestellt werden kann. Über das Turbinenrad 14 erfolgt wiederum ein Leistungsrückfluss, der über einen zweiten, starren Planetenradsatz 16 geführt wird, und seinerseits auf das Außenrad 17 des Leistungsverzweigungsgetriebes 5 wirkt und das Übersetzungsverhältnis beeinflusst. Dies stellt den zweiten Leistungszweig 18 des Leistungsverzweigungsgetriebes dar, der dem Leistungsrückfluss dient.

Die erfindungsgemäße erste Regelungsebene ist nun konstruktiv so ausgebildet, dass durch die Wahl der mechanischen Übersetzungen im Leistungsverzweigungsgetriebe sowie durch die Dimensionierung des Wandlers die parabolische Kennlinie der optimalen Leistungsaufnahme durch den Windkraftrotor 3 nachgebildet wird. Ausgangspunkt hierfür ist, dass für jede Windgeschwindigkeit eine ideale Rotordrehzahl für die maximale Leistungsaufnahme aus der Luftströmung angegeben werden kann. Hierzu wird auf die vorstehende Darlegung zur Figur 3 verwiesen. Als weitere Bedingung ist gleichzeitig eine konstante Ausgangsdrehzahl des Antriebsstrangs für den elektrischen Generator vorgegeben. Im vorliegenden Fall liegt diese bei 1500 U/min. Die notwendigen Umlaufgeschwindigkeiten der Getriebekomponenten des Leistungsverzweigungsgetriebes, etwa des Außenrades und des Sonnenrades, können nun unter Beachtung dieser Vorgaben für jede Windgeschwindigkeit im Teillastbereich festgelegt werden. Hierzu ist zu beachten, dass der Antriebsstrang die parabolische Leistungsaufnahmecharakteristik für eine im Wesentlichen konstant bleibende Stellung des Reaktionsglieds 15 des hydrodynamischen Stellwandlers 12 nachbilden muss.

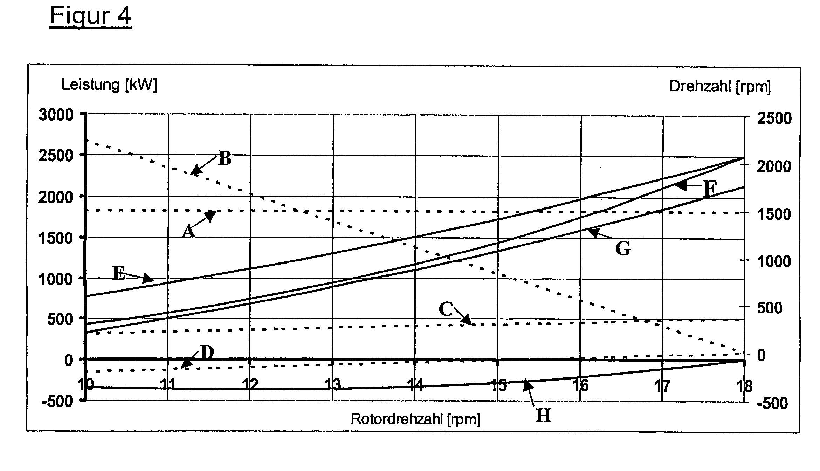

Figur 4 stellt die sich am Antriebsstrang einstellenden Drehzahlen sowie die in den einzelnen Zweigen übertragenen Leistungen dar. Im Einzelnen zeigt die Kurve A die Drehzahl der Abtriebswelle 10, Kurve B die Drehzahl des Turbinenrads 14 des hydrodynamischen Wandlers 12, Kurve C die Drehzahl der Eingangswelle 2 und die Kurve D die Drehzahl auf dem Außenrad 17 des Leistungsverzweigungsgetriebes 5. Für die Leistungsflüsse stellt die Kurve E die vom Windrotor aufgenommene Leistung dar, Kurve F ist die Leistung auf dem Sonnenrad 9, Kurve G die vom Antriebsstrang übertragene Leistung und Kurve H gibt die über den zweiten Leistungszweig 18 vom hydrodynamischen Wandler 12 auf das Leistverzweigungsgetriebe 5 zurückfließende Leistung an.

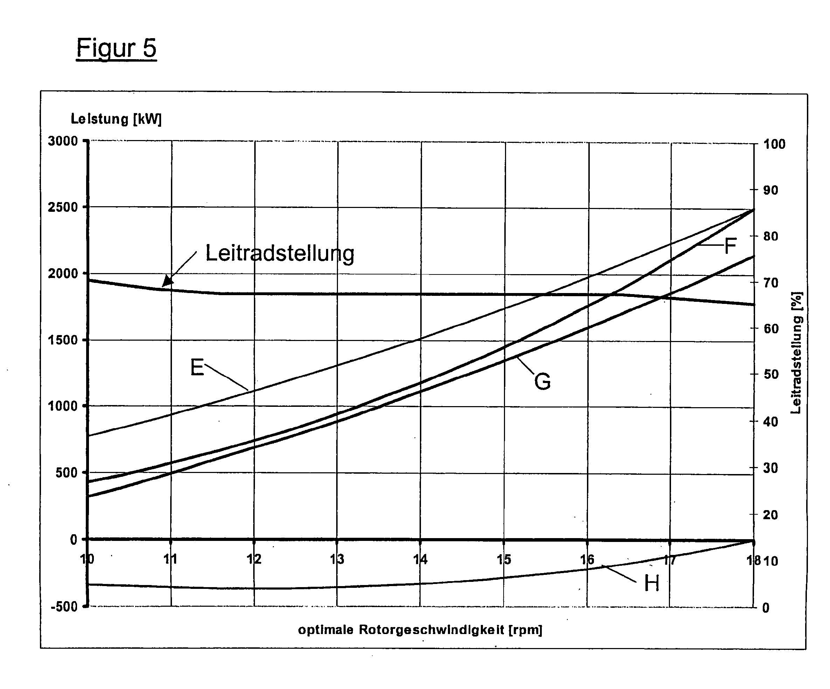

Figur 5 zeigt nochmals den Leistungsfluss für dieses Ausführungsbeispiel sowie die Einstellung des Reaktionsgliedes des hydrodynamischen Stellwandlers, im vorliegenden Fall des Leitrades. Die Leistungsflusskurven E, F, G und H entsprechen jenen aus Figur 4. Sichtbar ist, dass bei einer optimalen Leistungsaufnahme entlang der Parabolik, die durch die Charakteristik des Antriebsstrangs nachgebildet werden kann, mit einer über den gesamten dargestellten Teillastbereich mit einer im Wesentlichen gleich bleibenden Leitschaufelstellung gearbeitet werden kann. Diese Einstellung wird nachfolgend als die justierte Einstellung des hydrodynamischen Wandlers bezeichnet. Es ist also keine Regelung des Reaktionsglieds nötig, um die Konstanz der Ausgangsdrehzahl des Antriebsstrangs zur Beschickung des elektrischen Generators bei gleichzeitiger variabler optimaler Windrotordrehzahl zu erreichen. Hierbei wird darauf verwiesen, dass die Steilheit der die Leistungsaufnahme charakterisierenden Parabel durch die Übersetzungsdimensionierung der Komponenten des Leistungsverzweigungsgetriebes in Verbindung mit der Dimensionierung des Wandlers eingestellt werden kann. Diese Charakteristik des erfindungsgemäßen Antriebsstranges wird nachfolgend als Selbstregelung bezeichnet.

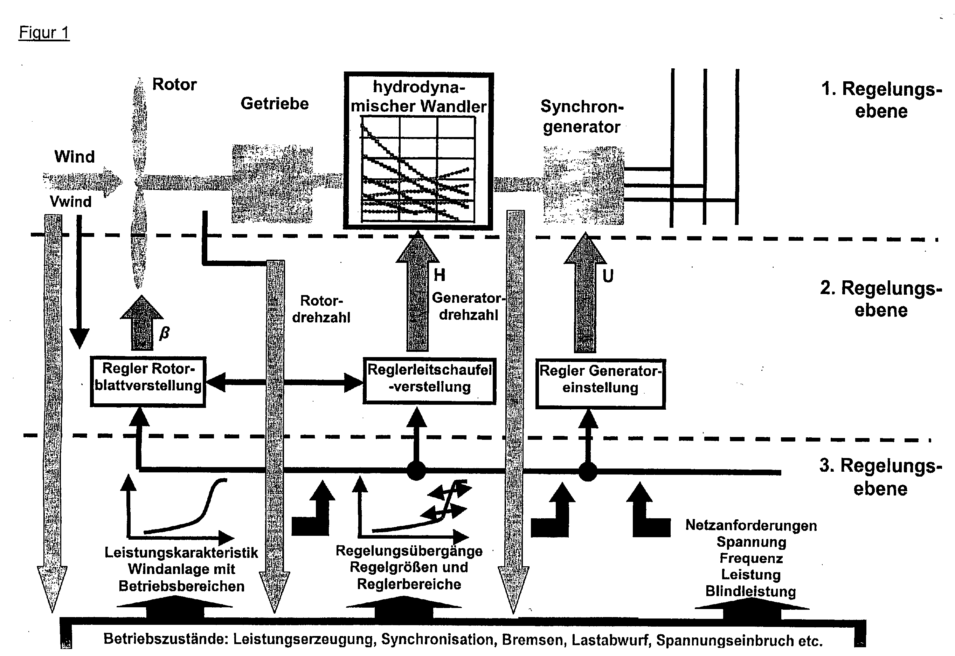

Figur 1 zeigt die hierarchische Anordnung der Regelungsebenen für eine Windkraftanlage gemäß der Erfindung. Die erste Regelungsebene ist der selbstregelnde, voranstehend beschriebene Antriebstrang mit Windrotor und Generator. Diese wird von der zweiten Regelungsebene überlagert, welche die Regler für die Rotorblattwinkel, die Stellung des Reaktionsglieds des hydrodynamischen Wandlers und einen Regler für die Leistungselektronik des Generators umfasst. In dieser Ebene findet für jeden der genannten Regler ein Soll-Ist-Wertvergleich statt, woraufhin entsprechende Stellsignale ausgegeben werden.

Erfindungsgemäß ist nicht jeder Regler der zweiten Regelungsebene für alle Betriebsbereiche bzw. Betriebszustände aktiviert. Eine Steuerung der Regleraktivierung sowie einer Reglergewichtung bzw. einem graduierten Umschalten zwischen einzelnen Reglern wird durch die dritte Regelungsebene bewirkt. Diese wählt nicht nur in Abhängigkeit des Betriebszustandes bzw. des Betriebsbereiches die zu regelnden Größen aus, sondern es ist auch möglich, für ein und dieselbe Größe, z. B. den Rotorblattwinkel, unterschiedliche Regler oder unterschiedliche Reglereinstellungen zu verwenden. Hierdurch kann die Regelungscharakteristik und die Regelungsgeschwindigkeit sowie die Reglergüte auf die jeweils spezielle Situation angepasst werden. Ferner ergibt sich über die dritte Regelungsebene als übergeordnete Steuerungsebene eine Einstellung der Reglersollwerte sowie der gewählten Arbeitspunkte.

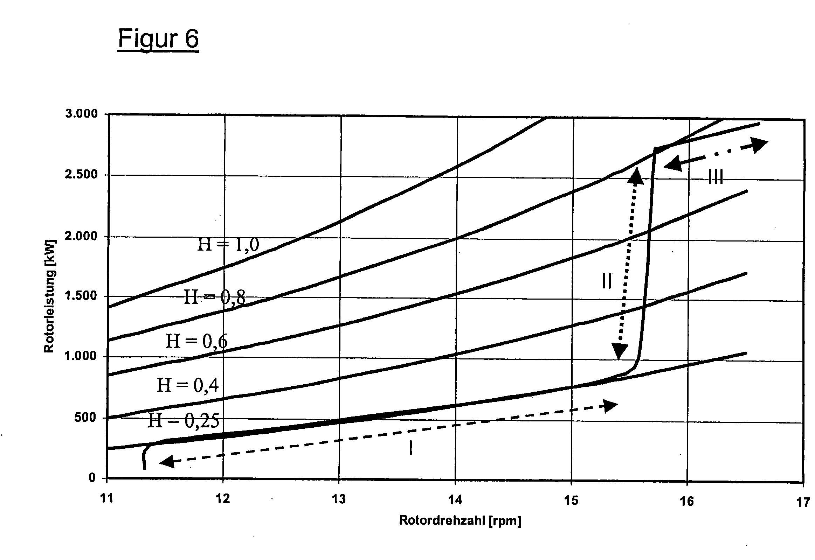

Die Auswahl von verschiedenen Reglern der Regelungsebene 2 für unterschiedliche Betriebsbereiche wird anhand von Figur 6 erläutert. Dargestellt ist das vom Windrotor aufgenommene Moment in Abhängigkeit der Rotordrehzahl. Gezeigt ist ferner eine Kurvenschar, die das Drehmoment/Drehzahlverhältnis für unterschiedliche Stellungen (H) des Reaktionsglieds des hydrodynamischen Stellwandlers aufzeigt.

Der mit I bezeichnete Betriebsbereich stellt den Teillastbereich bzw. parabolischen Lastbetrieb dar. Bevorzugt wird in diesen Teillastbereich nur die Selbstregelung der ersten Regelungsebene angewandt, d. h. keiner der Regler der zweiten Regelungsebene ist aktiv. Hierzu wird in der ersten Regelungsebene das Reaktionsglied so gesteuert, d. h. auf einen optimalen konstanten Wert eingestellt, dass der Windrotor leistungsoptimal in seiner Drehzahl geführt wird und aus dem Luftstrom die maximale Leistung entnimmt.

Zur Überwachung der leistungsoptimalen Führung des Windrotors im Teillastbereich bzw. parabolischen Lastbetrieb sind der dritten Regelungsebene Sensoren sowie eine entsprechende Sensorsignalverarbeitung zugeordnet. Hierzu werden bevorzugt die mittlere Windgeschwindigkeit, die Drehzahl des Windrotors und die Generatordrehzahl erfasst. Ferner ist denkbar weitere Betriebsparameter des Antriebsstrangs und des Generators zu überwachen und evtl. Modell basiert zu schätzen. Hierbei kann es sich um übertragene Drehmomente und Leistungen handeln. Ausgehend von dieser Erfassung des aktuellen Betriebsbereiches bzw. des vorliegenden Betriebszustands können durch die dritte Regelungsebene Vorgaben an die zweite und die erste Regelungsebene der Windkraftanlage weitergegeben werden. Die hierfür notwendigen Signalübertragungsstrecken und Signalauswerteeinheiten liegen im Rahmen des fachmännischen Ermessens und können beispielsweise als ein Bussystem ausgebildet sein.

Für den Fall des Normalbetriebs im Teillastbereich bzw. parabolischen Lastbetrieb wird beispielsweise durch die dritte Regelungsebene bestimmt, ob die erste Regelungsebene eine optimale Einstellung des Reaktionsgliedes des hydrodynamischen Wandlers verwendet, die eine Selbstregelung entlang der Parabolik ermöglicht. Wie voranstehend dargestellt, ist diese optimale Einstellung des Reaktionsgliedes eine systeminhärente Größe, gleichwohl kann der Fall auftreten, dass die Projektierungsdaten für die Windkraftanlage bezüglich der mittleren Windgeschwindigkeit, der Geometrie des Rotorblatts sowie der hierauf aufbauenden Dimensionierung des hydrodynamischen Antriebsstranges etwas abweichen von den tatsächlichen Betriebsbedingungen. Für diesen Fall kann durch die dritte Regelungsebene eine Abweichung von der leistungsoptimalen Führung der ersten Regelungsebene detektiert werden, woraufhin entsprechende Anpassungen einzuleiten sind. Hierzu wird die dritte Regelungsebene die Justageeinstellung des Reaktionsglieds des hydrodynamischen Wandlers in der ersten Regelungsebene nachstellen und gegebenenfalls auf der zweiten Regelungsebene den Regler für die Winkelstellung des Rotorblatts aktivieren. Typischerweise wird hierfür eine kleine Abweichung von der Vollangriffsstellung für die Rotorblätter als Ist-Wert gewählt, wobei der Regler für die Rotorblattstellung der zweiten Regelungsebene den Selbstregelungseffekt der ersten Regelungsebene jedoch lediglich unterstützt. Diese Nachrangigkeit des Reglers der zweiten Regelungsebene spiegelt sich vorzugsweise auch in den Einstellungen der Reglerparameter, etwa in den Regelungszeitkonstanten, wieder, welche wiederum von der dritten Regelungsebene für diesen Fall des Normalbetriebes im Teillastbetriebs gesetzt werden.

Oberhalb einer bestimmten Drehzahlschwelle, die im Ausführungsbeispiel nach Figur 6 einer Drehzahl von etwa 15,5 min⁻¹ entspricht, wird der Teillastbetriebsbereich verlassen und der Betriebsbereich mit abgeregelter Rotordrehzahl zur Geräuschbegrenzung erreicht. In diesem mit II bezeichneten Betriebsbereich wird die Steuerung bzw. Einstellung auf einen konstanten Wert des Reaktionsglieds des hydrodynamischen Stellwandlers durch eine Regelung ersetzt. Diese Regelung wählt nun den Arbeitspunkt für das Reaktionsglied solchermaßen, dass die Drehzahl des Windrotors im einfachsten Fall konstant gehalten wird und im Allgemeinen entlang einer Kurve, die vom Drehmoment, welches vom Windrotor aufgenommen wird, abhängt, geführt wird. Entsprechend der vorgegebenen Solldrehzahl des Windrotors wird nun das Reaktionsglied so nachgestellt, dass sich durch die Verschiebung des Leistungsrückflusses auf dem zweiten Leistungszweig die Übersetzungsverhältnisse im Leistungsübertragungsgetriebe verändern und aufgrund der durch den Generator eingeprägten Konstanz der Drehzahl auf dem ersten Leistungszweig des Leistungsverzweigungsgetriebes eine bestimmte Solldrehzahl erreicht wird. Durch eine entsprechende Einstellung der Reglercharakteristik wird nun erreicht, dass der Regler diesen Arbeitspunkt aufgrund einer Veränderung der mittleren Windgeschwindigkeit nachregelt und kurzzeitige Veränderungen, wie sie durch Windböen entstehen, zu Drehzahlveränderungen um diesen geregelten Arbeitspunkt führen. Hierbei wird wiederum die Selbstregelungscharakteristik der ersten Regelungsebene verwendet und so im Sinne einer Kurzzeitenergiespeicherung die Kraftstöße durch Böen gemindert sowie die kurzzeitigen Windleistungserhöhungen zu einer Steigerung der vom Antriebstrang übertragenen Effektivleistung ausgenutzt.

Die für diesen geräuschbegrenzten Betriebsbereich II vorgenommene Auswahl, Aktivierung und Gewichtung der Regler der zweiten Regelungsebene wird erfindungsgemäß durch die dritte Regelungsebene vorgenommen. Hierzu werden die System- und Umgebungsmessgrößen, insbesondere die Rotor- und Generatordrehzahl, die Generatorleistung und die mittlere Windgeschwindigkeit, auf der dritten Regelungsebene verarbeitet und der vorliegende Betriebsbereich und Betriebszustand bestimmt sowie hierauf aufbauend Einstellungen, Arbeitspunkte und Arbeitsbereiche für die erste und insbesondere die zweite Regelungsebene gesetzt.

Figur 6 zeigt ferner den Übergang zum Volllastbereich einer Windkraftanlage, der durch das Bezugszeichen III bezeichnet wird. Hierbei ist die Leistungsaufnahme der Windkraftanlage konstant zu halten. Dies gelingt durch ein weiteres Hinzuschalten eines Reglers aus der zweiten Regelungsebene zum weiterhin eingesetzten Regler für das Reaktionsglied des hydrodynamischen Stellwandlers. Hierbei handelt es sich um einen Regler für die Winkelblattstellung des Windrotors, einen so genannten Pitchregler. Die entsprechende Auswahl der Regler der zweiten Regelungsebene wird wiederum erfindungsgemäß durch die dritte Regelungsebene veranlasst.

Der Betriebsbereich "Drehzahl geführter Bereich zur Geräuschbegrenzung", der in Figur 6 mit II gekennzeichnet ist, kann je nach Aufstellungsort der Windkraftanlage unterschiedliche Werte annehmen oder, etwa für den Offshore-Bereich, sogar entfallen, so dass vom Teillastbereich bzw. parabolischen Lastbetrieb I direkt zum leistungsbegrenzenden Volllastbereich III übergegangen werden kann.

Ausgehend von unterschiedlichen Betriebszuständen der Windkraftanlage, dies kann die Startphase, die Stoppphase, die Synchronisationsphase sein, ergeben sich weitere Notwendigkeiten, auf die die Regelung der Windkraftanlage reagieren muss. Auch Ereignisse bzw. Anforderungen im Zusammenhang mit dem elektrischen Netzwerk, an welches eine Ankopplung besteht, hierbei kann es sich um einen Kurzschluss, eine Leistungsreduktion oder eine Blindleistungsanforderung handeln, kann eine Reglerauswahl durch die dritte Regelungsebene erfolgen. Bevorzugt wird, dass nur im Falle einer solchen Netzanforderung der Leistungsregler für den Generator aus der zweiten Regelungsebene durch die dritte Regelungsebene aktiviert wird.

Ein weiteres Beispiel für die unterschiedlichen Regleraktivierungen ist in der Figurenfolge 8a bis 8f gezeigt. Hierbei handelt es sich um die Start- und Stoppphase einer Windkraftanlage. Beim Anlaufen der Windkraftanlage wird die Winkelblattstellung so eingeregelt, dass nur ein Teil der Maximalleistung dem Wind-strom entnommen wird. Diese Leistung reicht gerade aus, um die Beschleunigung der Windkraftanlage auf eine gewünschte Drehzahl zu erreichen. Hierbei wird der Regler für die Winkelblattstellung des Windrotors, der so genannte Pitchregler, so gesteuert, dass die Anlage in den Bereich der Generatordrehzahl gelangt. Das Reaktionsglied des hydrodynamischen Stellwandlers der ersten Regelungsebene wird dann so gesteuert, dass die tatsächliche Generatordrehzahl bei geringfügiger Polabweichung der Solldrehzahl entspricht. Dieser Einstellungswert (Generatordrehzahl mit geringfügiger Polabweichung) ist ein System inhärenter Wert und kann folglich vorgegeben werden. Gleichwohl ist es auch möglich, diese initiale Justageeinstellung für das Reaktionsglied durch eine Regelung einzujustieren. Ist nun die Solldrehzahl mit geringer Polabweichung des Generators erreicht, so erfolgt eine Synchronisation mit dem elektrischen Netz. Nach der Synchronisation erfolgt die volle Leistungsentnahme durch das Eindrehen der Rotorblattstellung in den Wind. Ab diesem Punkt wird die Rotorblattstellung vorzugsweise nicht mehr aktiv geregelt und verbleibt auf dem vorbestimmten Wert.

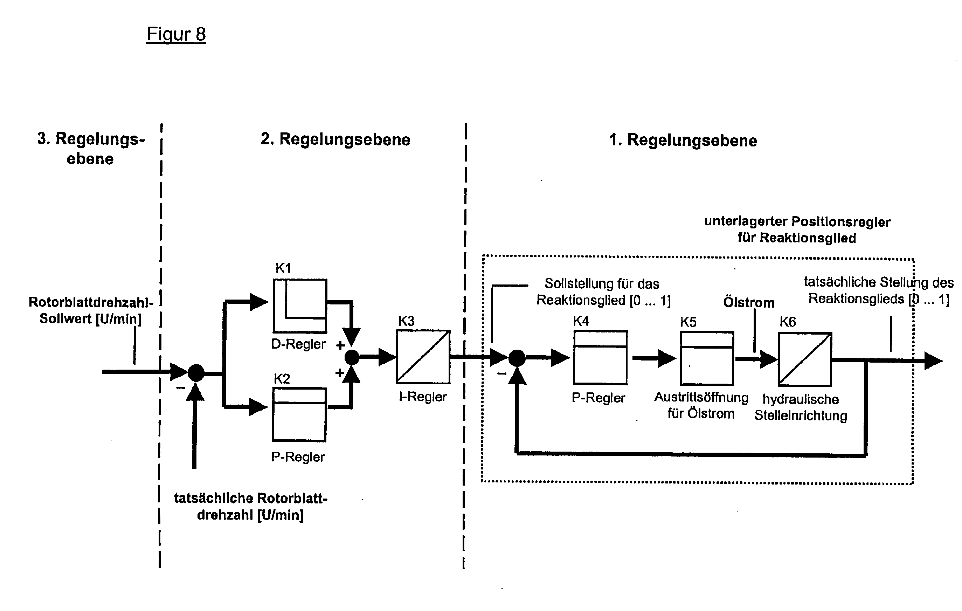

Beim Einleiten einer Bremsphase kann der Rotorblattregler wieder aktiviert werden, was beispielsweise in Figur 8e ersichtlich ist. Die Rotorblätter werden in ihrer Rotorblattstellung aus dem Wind gedreht.

Ein möglicher Betriebszustand auf den die dritte Regelungsebene reagiert ist ein Lastabwurf, wie er bei einem plötzlichen Wegfall eines großen Verbrauchers und insbesondere bei der Unterbrechung einer Höchstspannungsnetzverbindung zur Rückführung einer Netzinstabilität nötig werden kann. Hierbei gerät die Windkraftanlage sprungartig aus ihrem energetischen Gleichgewicht. Die der Windkraftanlage durch den Luftstrom zugeführte Wirkleistung kann nicht mehr in Form elektrischer Leistung an das Netz abgeführt werden. Rotor, Nabe und Antriebsstrang werden beschleunigt und der Leistungsüberschuss wird in kinetische Energie der rotierenden Massen umgewandelt. Übersteigen die Drehzahlen der rotierenden Teile die konstruktiv vorgesehenen Grenzwerte, können z.B. Rotor, Generatorläufer, Wellen und Lager beschädigt beziehungsweise vollständig zerstört werden. Schäden an rotierenden Teilen stellen grundsätzlich ein Sicherheitsrisiko dar und müssen deshalb unter allen Umständen vermieden werden. Zur Vermeidung eines solchen sicherheitskritischen Zustandes wird erfindungsgemäß in der oben beschriebenen dritten Regelungsebene ein eigens dafür vorgesehener Regelungsalgorithmus installiert. Die Regler der zweiten Ebene werden von dem zu diesem Zeitpunkt gültigen Betriebszustand in den Betriebszustand "Lastabwurf" versetzt. Dieser Betriebszustand wird im Wesentlichen dadurch charakterisiert, dass die Blattwinkel mit ihrer maximalen Verstellgeschwindigkeit aus dem Wind gedreht werden. Mit dieser Maßnahme wird die der Windkraftanlage aus der Luftströmung zugeführte Leistung schnellstmöglich reduziert. Nach dem Überschreiten des Nulldurchganges wird dem Rotor Energie entnommen. Die Anlage wird dabei so lange verzögert, bis sie wieder einen sicheren Betriebszustand erreicht hat. Weiterhin wird in der oben beschriebenen zweiten Regelungsebene der Regler für das Stellglied im Drehmomentwandler dahingehend beeinflusst, dass der Generatorläufer möglichst wenig über seine Nenndrehzahl hinaus beschleunigt wird und ebenfalls sicher abgebremst werden kann. Hierzu muss sichergestellt werden, dass die hydrodynamische Kopplung im Drehmomentwandler ihren größtmöglichen Wert annimmt. Entsprechend wird das Stellglied im Drehmomentwandler geführt. Durch diese beiden Regelungscharakteristiken wird sichergestellt, dass nicht nur Rotor und Generatorläufer der Windkraftanlage, sondern auch die Turbine im Überlagerungszweig keine sicherheits- oder schadenskritische Überdrehzahl erreicht.

Der Stator des Generators wird zur Leistungsübertragung mit dem elektrischen Netz wenigstens mittelbar verbunden. Handelt es sich bei der Erzeugung der elektrischen Leistung um einen Synchrongenerator, so lässt sich sein Betriebsverhalten über die Erregerspannung am Läufer beeinflussen. Tritt im elektrischen Netz ein Spannungseinbruch auf, muss durch die oben beschriebene dritte Regelungsebene die Erregerregelung für den Generator aus der zweiten Regelungsebene dahingehend beeinflussen, dass die Windkraftanlage eine möglichst geringe Belastung erfährt und das Netz maximal gestützt wird.

Die Leistung, die durch den Rotor der Luftströmung entnommen und der Windkraftanlage zugeführt wird, ist proportional zur sogenannten Leistungsziffer $c_p$ und proportional zur dritten Potenz der Windgeschwindigkeit. Die zur Erzeugung der elektrischen Nennleistung mindestens erforderliche Windgeschwindigkeit wird im Folgenden auch Nennwindgeschwindigkeit genannt. Übersteigt die vorherrschende Windgeschwindigkeit die Nennwindgeschwindigkeit, so muss die der Windkraftanlage aus der Luftströmung zugeführte Wirkleistung begrenzt werden. Dazu wird über die oben beschriebene dritte Regelungsebene der Pitchregler in der zweiten Ebene dahingehend aktiviert, dass entsprechend der über der Nennleistung liegenden elektrischen Wirkleistung der Pitchwinkel so lange vergrößert wird, bis die elektrische Nennleistung der Windkraftanlage nicht mehr überschritten wird. Gleichermaßen wird beim Unterschreiten der elektrischen Nennleistung der Pitchwinkel so lange verkleinert, bis die Leistungsziffer $c_p$ ihr Maximum erreicht hat und der Rotor der Luftströmung die maximale Leistung entnimmt.

Durch das zeitlich veränderliche Verhalten der Verbraucher im elektrischen Netz kann vom Netzbetreiber ein wechselnder Bedarf an kapazitiver oder induktiver Blindleistung von der erzeugenden Einheit nachgefragt werden. Dieses Verlangen kann durch einen Synchrongenerator als elektrische Maschine einfach über die Erregung befriedigt werden. Hierzu wird der vom Netzbetreiber nachgefragte kapazitive oder induktive Blindleistungsbedarf über den oben beschriebenen Regler der dritten Ebene in einen Sollwert der Erregerspannung der Erregerregelung der zweiten Ebene umgesetzt. Die Erregerregelung der zweiten Ebene sorgt dafür, dass die Erregerspannung in der Form beeinflusst wird, dass die von der Windkraftanlage an das elektrische Netz übertragene Blindleistung dem vom Netzbetreiber angefragten Wert entspricht.

Ferner ist es möglich in Abhängigkeit von Standzeiten, Lastkollektiven und Wartungsintervallen einen Schonbetriebszustand einzuführen. Hierbei kann es sich z.B. um ein frühzeitiges Herausdrehen der Windkraftanlage aus dem Wind bei böigen Windverhältnissen handeln, was über die Rotorblattstellung erreicht wird. Außerdem kann ein spezieller Betriebszustand für die Testphase nach der Aufstellung der Windkraftanlage oder zu Revisionszwecken definiert werden.

Darüber hinaus ist es denkbar, dass bestimmte Betriebszustände der Windkraftanlage zeitgleich, d. h. in Kombination, auftreten können, was dann jeweils zu einer angepassten Einflussnahme der dritten Regelungsebene auf die zweite Regelungsebene führt.

In Figur 8 ist für das Beispiel der Regelung des Reaktionsglieds des hydrodynamischen Wandlers die Gestaltung der Regelung der Windkraftanlage in wenigstens drei Regelungsebenen exemplarisch dargestellt. Angenommen wird der Betriebsbereich II aus Figur 6, bei dem die Drehzahl des Windrotors zur Geräuschbegrenzung geführt wird. Im hier vorliegenden vereinfachten Fall wird zum Erreichen dieses Ziels von der dritten Regelungsebene lediglich der Regler des Reaktionsglieds des hydrodynamischen Wandlers aus der zweiten Regelungsebene aktiviert, wobei von der dritten Reglungsebene für die Rotorblattdrehzahl ein Sollwert vorgegeben wird. Auf der zweiten Regelungsebene findet nun ein Istwert - Sollwert-Vergleich für die Rotorblattdrehzahl statt, wobei die so bestimmte Reglerabweichung die Eingangsgröße des Reglers für das Reaktionsglied des hydrodynamischen Wandlers darstellt. Im hier gezeigten Fall wird ein PD-Regler mit einem nachgeschalteten I-Regler verwendet. Im Rahmen der Erfindung ist es jedoch möglich, eine Vielzahl weiterer Regelungsansätze wie etwa eine Fuzzy-Regelung oder eine Zustandsregelung zu verwenden.

Als Ausgangswert gibt der Regler für das Reaktionsglied des hydrodynamischen Wandlers eine Sollwert-Einstellung zwischen den Grenzwerten 0 -1 für die erste Regelungsebene vor. Zur Einstellung auf eine bestimmten vorgegebenen Wert für das Reaktionsglied wird im vorliegenden Ausführungsbeispiel in der ersten Regelungsebene ein unterlagerter Regler für das Reaktionsglied verwendet. Im hier gezeigten vereinfachten Fall wird hierzu ein P-Regler angewandt, der auf das System der Stelleinrichtung für das Reaktionsglied wirkt. Dies weist ein Systemverhalten auf, welches vereinfacht durch das proportionale Verhalten des Ölstroms in Abhängigkeit der Stellung der Austrittsöffnung und durch das integrierende Verhalten der hydraulischen Stelleinrichtung gekennzeichnet ist.

Die über den unterlagerten Positionsregler beeinflusste tatsächliche Stellung des Reaktionsglieds wirkt wiederum im vorangehend beschriebenen erfindungsgemäßen hydrodynamischen Antriebstrang, der nicht in Figur 8 gezeigt ist, in Verbindung mit dem Generator auf den Windrotor zurück. Ebenfalls nicht im Detail dargestellt ist die Rückführung der tatsächlichen Rotordrehzahl für den Soll/Istwert-Vergleich auf der zweiten Regelungsebene.

**Patentansprüche**

1. Windkraftanlage mit mindestens drei Regelungsebenen;

   1.1 die erste Regelungsebene umfasst einen Windrotor, ein Leistungsverzweigungsgetriebe (5), das wenigstens mittelbar vom Windrotor (3) angetrieben wird und einen ersten und einen zweiten Leistungszweig (7, 18) umfasst, einen hydrodynamischen Stellwandler (12) mit wenigsten einem Reaktionsglied (15), der Leistung vom ersten Leistungszweig (7) aufnimmt und in Abhängigkeit der Einstellung des Reaktionsglieds (15) einen Leistungsrückfluss über den zweiten Leistungszweig (18) zum Leistungsverzweigungsgetriebe (5) bewirkt, sowie einen Generator (11), der wenigstens mittelbar vom ersten Leistungszweig (7) angetrieben wird und elektrische Leistung an ein elektrisches Netz mit konstanter Netzfrequenz abgibt;

   1.2 die Kombination aus Leistungsverzweigungsgetriebe (5) und hydrodynamischem Stellwandler (12) der ersten Regelungsebene entspricht in ihrer Charakteristik im Wesentlichen der Leistungsaufnahme des Windrotors (3) bei leistungsoptimaler Drehzahlführung;

   1.3 in der ersten Regelungsebene wird die Einstellung des Reaktionsglieds (15) des hydrodynamischen Stellwandlers (12) gesteuert;

   1.4 die zweite Regelungsebene umfasst einen Regler für die Winkelstellung der Rotorblätter und/oder einen Regler für die Einstellung des Reaktionsglieds des hydrodynamischen Stellwandlers und/oder einen Regler der Leistungselektronik des Generators;

   1.5 in Abhängigkeit der Betriebszustände der Windkraftanlage und/oder des elektrischen Netzes und/oder der Windcharakteristik aktiviert und deaktiviert und/oder gewichtet die dritte Regelungsebene die Regler der zweiten Regelungsebene und/oder gibt diesen Sollkennlinien vor.

2. Windkraftanlage mit drei Regelungsebenen nach Anspruch 1, **dadurch gekennzeichnet, dass** für den Normalbetriebszustand und Teillastbedingungen die Regler der zweiten Regelungsebene vorzugsweise deaktiviert sind und die Winkelstellung der Rotorblätter und die Einstellung des Reaktionsglieds des hydrodynamischen Stellwandlers einen festen vorgegebenen Wert einnehmen, wobei die Einstellung des Reaktionsglieds des hydrodynamischen Stellwandlers so gewählt ist, dass die Drehzahlführung des Windrotors im Wesentlichen leistungsoptimal und die Generatordrehzahl im Wesentlichen konstant ist.

3. Windkraftanlage mit wenigstens drei Regelungsebenen, **dadurch gekennzeichnet, dass** im Normalbetrieb oberhalb einer festgelegten Drehzahlschwelle des Windrotors der Regler für die Einstellung des Reaktionsglieds des hydrodynamischen Wandlers aktiviert ist, wobei die Drehzahl des Windrotors einen vorbestimmten Wert oder Wertebereich annimmt.

4. Windkraftanlage mit wenigstens drei Regelungsebenen nach Anspruch 3, **dadurch gekennzeichnet, dass** ein vorbestimmter Drehzahlwert oder Drehzahlwertebereich für den Windrotor von der dritten Regelungsebene festgelegt wird.

5. Windkraftanlage mit wenigstens drei Regelungsebenen nach Anspruch 3 oder 4, **dadurch gekennzeichnet, dass** die festgelegte Drehzahl des Windrotors einen im Wesentlichen konstanten Wert oder ein konstanten Wertebereich annimmt.

6. Windkraftanlage mit mindestens drei Regelungsebenen nach Anspruch 3 oder 4, **dadurch gekennzeichnet, dass** der festgelegte Wert oder Wertebereich der Windrotordrehzahl in Abhängigkeit von dem am Windrotor angreifenden Moment festgelegt wird.

7. Windkraftanlage mit mindestens drei Regelungsebenen nach Anspruch 1, **dadurch gekennzeichnet, dass** im Normalbetrieb unter Volllast der Regler für die Winkelstellung der Rotorblätter und der Regler für die Einstellung des Reaktionsglieds des hydrodynamischen Stellwandlers aktiviert sind.

8. Windkraftanlage mit mindestens drei Regelungsebenen nach Anspruch 1, **dadurch gekennzeichnet, dass** der Regler der Leistungselektronik des Generators lediglich bei einer Netzanforderung nach Leistung und/oder Blindleistung aktiviert ist.

9. Windkraftanlage mit mindestens drei Regelungsebenen nach Anspruch 1, **dadurch gekennzeichnet, dass** die Regler der zweiten Regelungsebene so aktiviert und deaktiviert werden, dass ein graduierter Übergang von einem Betriebszustand oder einer Betriebsbedingung in einen anderen Betriebszustand oder eine andere Betriebsbedingung erfolgt.

10. Windkraftanlage mit mindestens drei Regelungsebenen nach Anspruch 1, **dadurch gekennzeichnet, dass** die Betriebszustände, welche von der dritten Regelungsstufe berücksichtigt und definiert werden die Startphase, die Synchronisationsphase, die Stopphase, einen Lastabwurf, einen Kurzschluss, eine Blindleistungsanforderung und eine Leistungsreduktion umfassen.

11. Windkraftanlage mit drei Regelungsebenen nach Anspruch 1-10, **dadurch gekennzeichnet, dass** mindestens die Betriebszustände Teillast bei parabolischer Leistungsaufnahme und Volllast vorliegen.

12. Verfahren zum Regeln einer Windkraftanlage, wobei

12.1 in einer erste Regelungsebene umfassend einen Windrotor, ein Leistungsverzweigungsgetriebe, das wenigstens mittelbar vom Windrotor angetrieben wird und einen ersten und einen zweiten Leistungszweig umfasst, einen hydrodynamischen Stellwandler mit wenigsten einem Reaktionsglied, der Leistung vom ersten Leistungszweig aufnimmt und in Abhängigkeit der Einstellung des Reaktionsglieds einen Leistungsrückfluss über den zweiten Leistungszweig zum Leistungsverzweigungsgetriebe bewirkt, sowie einen Generator, der wenigstens mittelbar vom ersten Leistungszweig angetrieben wird und elektrische Leistung an ein elektrisches Netz mit konstanter Netzfrequenz abgibt, wobei die Kombination aus Leistungsverzweigungsgetriebe und hydrodynamischem Stellwandler der ersten Regelungsebene, in ihrer Charakteristik im Wesentlichen der Leistungsaufnahme des Windrotors bei leistungsoptimaler Drehzahlführung entspricht, die Einstellung des Reaktionsglieds des hydrodynamischen Stellwandlers gesteuert wird; und

12.2 in einer zweiten Regelungsebene umfassend einen Regler für die Winkelstellung der Rotorblätter und/oder einen Regler für die Einstellung des Reaktionsglieds des hydrodynamischen Stellwandlers und/oder einen Regler der Leistungselektronik des Generators in Abhängigkeit der Betriebszustände der Windkraftanlage und/oder des elektrischen Netzes und/oder der Windcharakteristik die Regler von einer dritten Regelungsebene aktiviert und deaktiviert und/oder gewichtet und/oder diesen Sollkennlinien vorgegeben werden.

Rotor

Getriebe

hydrodynamischer Wandler

Synchrongenerator

1. Regelungsebene

Wind

Vwind

β

Rotordrehzahl

H

Generatordrehzahl

U

2. Regelungsebene

Regler Rotorblattverstellung

Reglerleitschaufel
-verstellung

Regler Generatoreinstellung

3. Regelungsebene

Leistungskarakteristik
Windanlage mit
Betriebsbereichen

Regelungsübergänge
Regelgrößen und
Reglerbereiche

Netzanforderungen
Spannung
Frequenz
Leistung
Blindleistung

Betriebszustände: Leistungserzeugung, Synchronisation, Bremsen, Lastabwurf, Spannungseinbruch etc.

EP 1 548 279 A1

Figur 2

## Figur 3

EP 1 548 279 A1

**Synchrongenerator**

Drehmoment [kNm]

Rotorleistung [kW]

**Windrotor**

Rotordrehmoment [kNm]

Parabolik (Leistung)

Drehmomentenverlauf

Rotordrehzahl [rpm]

Generatordrehzahl [rpm]

Figur 4

EP 1 548 279 A1

## Figur 5

Leistung [kW]

Leitradstellung

E

F

G

H

optimale Rotorgeschwindigkeit [rpm]

Leitradstellung [%]

EP 1 548 279 A1

Figur 6

## Figur 7

a) Windgeschwindigkeit [m/s]

Windprofil
Mittlere
Windgeschwindigkei:11m/s

Zeit [s]

b) Rotormoment [N/m]

Leerlauf

Bremsen

Zeit [s]

c) Drehmoment am Hauptschaft [N/m]

Zeit [s]

d) Rotordrehzahl [U/min]

Start

Stop

Zeit [s]

e) Rotorblattwinkel [°]

Zeit [s]

f) Reaktionsglied

Synchronisation

Zeit [s]

EP 1 548 279 A1

Figur 8

EP 1 548 279 A1

**3. Regelungs-ebene**

**2. Regelungsebene**

**1. Regelungsebene**

**unterlagerter Positionsregler für Reaktionsglied**

**Rotorblattdrehzahl-Sollwert [U/min]**

K1

**D-Regler**

K2

**P-Regler**

K3

**I-Regler**

+

+

−

**tatsächliche Rotorblatt-drehzahl [U/min]**

**Sollstellung für das Reaktionsglied [0 ... 1]**

K4

**P-Regler**

−

K5

**Austrittsöffnung für Ölstrom**

**Ölstrom**

K6

**hydraulische Stelleinrichtung**

**tatsächliche Stellung des Reaktionsglieds [0 ... 1]**

**Europäisches Patentamt**

# EUROPÄISCHER RECHERCHENBERICHT

Nummer der Anmeldung

EP 04 02 6122

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| P,A | WO 2004/088132 A (VOITH TURBO GMBH & CO. KG; BASTECK, ANDREAS) 14. Oktober 2004 (2004-10-14) * Zusammenfassung * * Seite 10, Absatz 2 * * Seite 12, Absatz 1 * * Abbildungen * ----- | 1,3,12 | F03D11/02 F16H47/08 F16H61/50 F03D7/04 |
| A | WO 81/01444 A (ALLMAENNA INGENJOERSBYRAN AB; NYGREN K) 28. Mai 1981 (1981-05-28) * Zusammenfassung * * Seite 4, Zeile 8 - Zeile 20; Abbildungen * ----- | 1,3,12 | |
| A | US 2003/168862 A1 (ISHIZAKI NAOKI) 11. September 2003 (2003-09-11) * Zusammenfassung; Abbildungen * ----- | 1,3,12 | |
| A | FR 1 031 929 A (J. M. VOITH G. M. B. H) 29. Juni 1953 (1953-06-29) * Seite 1, Zeilen 1-3 * * Anspruch 1; Abbildungen * ----- | 1 | RECHERCHIERTE SACHGEBIETE (Int.Cl.7) F03D F16H |

Der vorliegende Recherchenbericht wurde für alle Patentansprüche erstellt

| Recherchenort | Abschlußdatum der Recherche | Prüfer |
|---|---|---|
| Den Haag | 30. März 2005 | Criado Jimenez, F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 04 02 6122

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-03-2005

| Im Recherchenbericht angeführtes Patentdokument | Datum der Veröffentlichung | Mitglied(er) der Patentfamilie | Datum der Veröffentlichung |
|---|---|---|---|
| WO 2004088132 A | 14-10-2004 | DE 10314757 B3<br>WO 2004088132 A1 | 11-11-2004<br>14-10-2004 |
| WO 8101444 A | 28-05-1981 | SE 419113 B<br>CA 1144077 A1<br>DK 295981 A<br>EP 0039710 A1<br>SE 7909379 A<br>WO 8101444 A1 | 13-07-1981<br>05-04-1983<br>03-07-1981<br>18-11-1981<br>15-05-1981<br>28-05-1981 |
| US 2003168862 A1 | 11-09-2003 | JP 2003193956 A | 09-07-2003 |
| FR 1031929 A | 29-06-1953 | KEINE | |

EPO FORM P0461

Für nähere Einzelheiten zu diesem Anhang : siehe Amtsblatt des Europäischen Patentamts, Nr.12/82